# EUROPÄISCHE PATENTSCHRIFT

(11) **EP 3 753 388 B1**
(45) Veröffentlichungstag und Bekanntmachung des Hinweises auf die Patenterteilung: **22.05.2024**
(21) Anmeldenummer: 20401030.0
(22) Anmeldetag: 19.05.2020
(51) Int. Cl.: A01C 7/04

(54) **VEREINZELUNGSEINRICHTUNG**
SINGULATING DEVICE
DISPOSITIF DE SÉPARATION

(30) Priorität: 20.06.2019 DE 102019116716
(43) Veröffentlichungstag der Anmeldung: 23.12.2020
(73) Patentinhaber: Amazonen-Werke H. Dreyer SE & Co. KG, 49205 Hasbergen (DE)
(72) Erfinder: Hilbert, Florenz, 48282 Emsdetten (DE); Johannaber, Stefan Jan, 49536 Lienen (DE); Teckemeyer, Stephan, 49504 Lotte (DE); Mertens, Daniel, 26121 Oldenburg (DE); Wien, Thomas, 28816 Stuhr (DE)

(56) Entgegenhaltungen:
- DE-A1-102017 118 594
- FR-A- 923 995
- FR-A1- 2 678 472
- US-A- 2 505 758

## Beschreibung

Die Erfindung betrifft eine Vereinzelungseinrichtung nach dem Oberbegriff des Patentanspruchs 1 und eine Sämaschine nach dem Oberbegriff des Patentanspruchs 14.

Sämaschinen weisen üblicherweise mehrere Vereinzelungseinrichtungen auf, mittels welchen die abzulegenden Saatkörner vereinzelt werden. Entsprechende Vereinzelungseinrichtungen weisen üblicherweise eine Vereinzelungsscheibe auf, welche mehrere Kornaufnahmeausnehmungen umfasst. Die Kornaufnahmeausnehmungen nehmen im Vereinzelungsbetrieb einzelne Saatkörner des zu vereinzelnden Saatguts auf, um das jeweils aufgenommene Saatkorn zu vereinzeln.

Die Saatkörner verschiedener Pflanzenarten können sich hinsichtlich Größe, Form und/oder Gewicht unterscheiden. Eine optimale Belegung der Kornaufnahmeausnehmungen einer Vereinzelungsscheibe kann folglich nur dann gewährleistet werden, wenn die Größe der Kornaufnahmeausnehmungen an die Saatguteigenschaften angepasst ist. Durch die Verwendung einer Vereinzelungsscheibe mit Kornaufnahmeausnehmungen, deren Größe an das Saatgut angepasst ist, kann die Anzahl von Doppel- und Fehlstellen bei der Saatgutablage erheblich verringert werden.

Bei einer Vielzahl von bekannten Vereinzelungseinrichtungen ist die Größe der Kornaufnahmeausnehmungen der Vereinzelungsscheibe nicht einstellbar. Eine derartige Vereinzelungseinrichtung ist beispielsweise aus der Druckschrift EP 2 807 914 B1 bekannt. Aufgrund der fehlenden Möglichkeit, die Größen der Kornaufnahmeausnehmungen der Vereinzelungsscheibe zu verändern, ist bei derartigen Vereinzelungseinrichtungen ein zeitintensiver Wechsel der Vereinzelungsscheibe erforderlich, um die Größe der Kornaufnahmeausnehmungen an das auszubringende Saatgut anzupassen.

Andere Vereinzelungseinrichtungen weisen eine Vereinzelungsscheibe auf, an welcher mittels einer Relativbewegung von zwei Vereinzelungsscheibenteilen unterschiedliche Größen von Kornaufnahmeausnehmungen einstellbar sind. Eine derartige Vereinzelungseinrichtung ist beispielsweise aus der Druckschrift DE 10 2017 118 594 A1 bekannt. Bei dieser und anderen Vereinzelungseinrichtungen ist die Einstellung einer geeigneten Größe der Kornaufnahmeausnehmungen jedoch vergleichsweise aufwendig und zeitintensiv und/oder erfordert eine manuelle Verstellung an der Vereinzelungseinrichtung.

Eine weitere derartige Vereinzelungseinrichtung ist in FR 2 678 472 A1 offenbart, wobei auch hier die Einstellung der Größe der Kornaufnahmeausnehmungen eine vergleichsweise aufwendige und zeitintensive manuelle Verstellung erfordert.

Die der Erfindung zugrundeliegende Aufgabe besteht somit darin, die Einstellung der Größe von Kornaufnahmeausnehmungen einer Vereinzelungsscheibe zu vereinfachen.

Die Aufgabe wird gelöst durch eine Vereinzelungseinrichtung der eingangs genannten Art, wobei die zwei Vereinzelungsscheibenteile zur Einstellung der Größe der Kornaufnahmeausnehmungen mittels des Antriebsgeräts der Vereinzelungseinrichtung relativ zueinander bewegbar sind.

Die Erfindung macht sich die Erkenntnis zunutze, dass ohnehin vorhandene Aktorik einer Vereinzelungseinrichtung auch zum Einstellen der Größe der Kornaufnahmeausnehmungen eingesetzt werden kann. Vorliegend wird das Antriebsgerät, welches im Vereinzelungsbetrieb der Vereinzelungseinrichtung die Vereinzelungsscheibe rotatorisch antreibt, zur Umsetzung einer Relativbewegung der zwei Vereinzelungsscheibenteile genutzt, wodurch eine antriebsgesteuerte Einstellung der Größe der Kornaufnahmeausnehmungen umgesetzt werden kann. Die Einstellbarkeit der Größe der Kornaufnahmeausnehmungen wird somit besonders kostengünstig und ohne die Notwendigkeit einer Steigerung der strukturellen Systemkomplexität ermöglicht. Darüber hinaus sind keine manuellen Verstellungen an der Vereinzelungseinrichtung zur Einstellung der Größe der Kornaufnahmeausnehmungen erforderlich.

Die Umsetzung der Relativbewegung der Vereinzelungsscheibenteile mittels des Antriebsgeräts kann mit oder ohne die Verwendung von Hilfsmitteln erfolgen, welche auf eine oder beide Vereinzelungsscheibenteile wirken. Als Hilfsmittel kann beispielsweise ein Arretierglied zum Einsatz kommen, mittels welchem ein Vereinzelungsscheibenteil zur Einstellung der Größe der Kornaufnahmeausnehmungen temporär festgestellt oder arretiert wird. Wenn die Vereinzelungsscheibenteile reibschlüssig miteinander verbunden sind, kann der Reibschluss zwischen den Vereinzelungsscheibenteilen zur Umsetzung einer Relativbewegung der Vereinzelungsscheibenteile auch über eine ruck- bzw. impulsartige Bewegung eines Vereinzelungsscheibenteils durch das Antriebsgerät temporär aufgelöst werden.

Die zwei Vereinzelungsscheibenteile sind zur Einstellung der Größe der Kornaufnahmeausnehmungen mittels des Antriebsgeräts vorzugsweise relativ zueinander verdrehbar. Die Kornaufnahmeausnehmungen der Vereinzelungsscheibe dienen zur Mitnahme und Vereinzelung von Saatkörnern. Dadurch, dass zumindest zwei unterschiedliche Größen von Kornaufnahmeausnehmungen einstellbar sind, ist beim Ausbringen unterschiedlicher Saatgutsorten kein Scheibenwechsel zur Änderung der Größe der Kornaufnahmeausnehmungen erforderlich. In der Praxis müssen somit keine Vereinzelungsscheibensätze mitgeführt werden, um unterschiedliche Größen von Kornaufnahmeausnehmungen bei der Ausbringung unterschiedlicher Saatgutsorten einstellen zu können.

Beispielsweise ist durch eine Relativbewegung der zwei Vereinzelungsscheibenteile eine von mehreren vorgegebenen Größen der Kornaufnahmeausnehmungen einstellbar. Alternativ kann die Größe der Kornaufnahmeausnehmungen auch stufenlos durch eine Relativbewegung der Vereinzelungsscheibenteile zueinander anpassbar sein. Dies kann beispielsweise mit Iris-Blenden oder sich in Umfangsrichtung aufweitenden Langlöchern in einem Vereinzelungsscheibenteil realisiert werden.

In einer bevorzugten Ausführungsform weist die erfindungsgemäße Vereinzelungseinrichtung ein bewegbares Arretierglied auf. Das bewegbare Arretierglied ist dazu eingerichtet, zur Einstellung der Größe der Kornaufnahmeausnehmungen ein Vereinzelungsscheibenteil zu arretieren. Das Arretierglied kann ein bewegbarer Arretierhaken sein, welcher mit dem arretierbaren Vereinzelungsscheibenteil in Eingriff bringbar ist. Das Arretierglied kann ferner schwenkbar und/oder linear bewegbar sein. Im arretierten Zustand des arretierbaren Vereinzelungsscheibenteils ist die Bewegung des anderen nicht-arretierten Vereinzelungsscheibenteils über das Antriebsgerät weiterhin möglich, sodass eine Relativbewegung zwischen den Vereinzelungsscheibenteilen über das Antriebsgerät umsetzbar ist. Das Antriebsgerät ist vorzugsweise mit dem nicht-arretierbaren Vereinzelungsscheibenteil verbunden. Das Arretierglied arbeitet somit gegen das Antriebsgerät, um eine Relativbewegung der Vereinzelungsscheibenteile herbeizuführen.

In einer anderen bevorzugten Ausführungsform der erfindungsgemäßen Vereinzelungseinrichtung weist das mittels des Arretierglieds arretierbare Vereinzelungsscheibenteil ein oder mehrere Anschlagselemente auf, wobei das Arretierglied und das eine oder die mehreren Anschlagselemente zur Arretierung des arretierbaren Vereinzelungsscheibenteils in Anschlag bringbar sind. Das arretierbare Vereinzelungsscheibenteil kann mehrere, insbesondere gleichmäßig über dessen Umfang verteilte, Anschlagselemente aufweisen. Das eine oder die mehreren Anschlagselemente können sich in Radialrichtung erstreckende Vorsprünge, Nasen oder Stege sein. Die Vorsprünge können sich radial nach außen oder radial nach innen erstrecken. Die Vorsprünge sind vorzugsweise am Außenumfang des arretierbaren Vereinzelungsscheibenteils angeordnet.

Es ist außerdem eine erfindungsgemäße Vereinzelungseinrichtung vorteilhaft, welche einen Arretiergliedaktuator aufweist. Der Arretiergliedaktuator ist vorzugsweise dazu eingerichtet, das Arretierglied zur Umsetzung oder zur Freigabe der Arretierung des arretierbaren Vereinzelungsscheibenteils relativ zu dem arretierbaren Vereinzelungsscheibenteil zu bewegen. Das Arretierglied kann somit über den Arretiergliedaktuator in eine Freigabestellung und eine Arretierstellung verbracht werden. In der Freigabestellung erfolgt keine Arretierung des arretierbaren Vereinzelungsscheibenteils, sodass die Vereinzelungsscheibenteile der Vereinzelungsscheibe keine Relativbewegung zueinander ausführen. Vorzugsweise ist das arretierbare Vereinzelungsscheibenteil reibschlüssig mit dem nicht-arretierbaren Vereinzelungsscheibenteil verbunden. Wenn sich das Arretierglied in der Arretierstellung befindet, führt eine durch das Antriebsgerät umgesetzte Bewegung des nicht-arretierbaren Vereinzelungsscheibenteils zu einer Relativbewegung des arretierten Vereinzelungsscheibenteils und des nicht-arretierbaren Vereinzelungsscheibenteils. Der Arretiergliedaktuator kann beispielsweise ein Elektromotor sein. Das Arretierglied ist vorzugsweise durch den Arretiergliedaktuator elektrisch verfahrbar. Der Arretiergliedaktuator kennt vorzugsweise die Position des Arretierglieds und/oder den aktuellen Arretierzustand des arretierbaren Vereinzelungsscheibenteils.

In einer weiteren bevorzugten Ausführungsform umfasst die erfindungsgemäße Vereinzelungseinrichtung eine Abstreifeinrichtung, welche einen bewegbaren Abstreifkörper aufweist und dazu eingerichtet ist, mittels des Abstreifkörpers Saatkörner von der Vereinzelungsscheibe abzustreifen. Das Arretierglied ist vorzugsweise als Bestandteil der Abstreifeinrichtung ausgebildet oder ist an der Abstreifeinrichtung befestigt. Vorzugsweise ist der Arretiergliedaktuator gleichzeitig der Positionierantrieb der Abstreifeinrichtung. Die Abstreifeinrichtung kann eine Halterung für den Abstreifkörper umfassen, wobei das Arretierglied an der Halterung befestigt sein kann. Insbesondere ist das Arretierglied an der Halterung angeschraubt, angenietet oder angespritzt.

Die erfindungsgemäße Vereinzelungseinrichtung wird ferner dadurch vorteilhaft weitergebildet, dass der Abstreifkörper im Vereinzelungsbetrieb der Vereinzelungseinrichtung mittels einer Positioniereinrichtung innerhalb eines Abstreifbereichs positionierbar ist, wobei durch Bewegen des Abstreifkörpers aus dem Abstreifbereich heraus ein Anschlagselement des arretierbaren Vereinzelungsscheibenteils mit dem Arretierglied in Anschlag bringbar ist. Über die Position des Abstreifkörpers innerhalb des Abstreifbereichs kann im Vereinzelungsbetrieb der Vereinzelungseinrichtung die Abstreifaggressivität der Abstreifeinrichtung eingestellt werden. Durch ein Bewegen des Abstreifkörpers aus dem Abstreifbereich heraus kann das an der Abstreifeinrichtung befestigte oder in die Abstreifeinrichtung integrierte Arretierglied mit einem Anschlagselement des arretierbaren Vereinzelungsscheibenteils in Eingriff gebracht werden. Vorzugsweise wird das Arretierglied in einer Endposition des Abstreifkörpers, welche vorzugsweise außerhalb des Abstreifbereichs liegt, mit einem Anschlagselement in Eingriff gebracht.

In einer weiteren bevorzugten Ausführungsform der erfindungsgemäßen Vereinzelungseinrichtung ist ein Vereinzelungsscheibenteil der zwei relativ zueinander bewegbaren Vereinzelungsscheibenteile als gelochter Ring ausgebildet. Das Vereinzelungsscheibenteil ist vorzugsweise als gelochter Kreisring, insbesondere aus Metall, ausgebildet. Das als gelochter Ring ausgebildete Vereinzelungsscheibenteil weist vorzugsweise eine erste Gruppe von Löchern mit einer ersten Lochgröße und eine zweite Gruppe von Löchern mit einer zweiten Lochgröße auf. Die Lochgröße der Löcher der ersten Gruppe unterscheidet sich von der Lochgröße der Löcher der zweiten Gruppe. Es sind vorzugsweise jeweils Löcher unterschiedlicher Größe benachbart zueinander angeordnet, sodass sich eine Lochfolge mit alternierender Lochgröße ergibt. Das als gelochter Ring ausgebildete Vereinzelungsscheibenteil ist vorzugsweise das arretierbare Vereinzelungsscheibenteil.

In einer weiteren bevorzugten Ausführungsform weist die erfindungsgemäße Vereinzelungseinrichtung eine Begrenzungseinrichtung auf, welche die Relativbewegung der zwei Vereinzelungsscheibenteile begrenzt. Die Begrenzungseinrichtung gibt vorzugsweise zwei Endlagenrelativpositionen der zwei Vereinzelungsscheibenteile vor. Die Begrenzungseinrichtung umfasst vorzugsweise zumindest ein Langloch und einen in dem Langloch bewegbaren Anschlagskörper. Der Anschlagskörper schlägt in den Endlagenrelativpositionen der zwei Vereinzelungsscheibenteile an der Begrenzungskante des Langlochs an.

In einer weiteren bevorzugten Ausführungsform der erfindungsgemäßen Vereinzelungseinrichtung ist eine erste Größe der Kornaufnahmeausnehmungen durch eine Relativbewegung der zwei Vereinzelungsscheibenteile in eine erste Endlagenrelativposition hinein einstellbar. Vorzugsweise ist eine zweite Größe der Kornaufnahmeausnehmungen durch eine Relativbewegung der zwei Vereinzelungsscheibenteile in eine zweite Endlagenrelativposition hinein einstellbar. Dadurch, dass die erste Größe der Kornaufnahmeausnehmungen und die zweite Größe der Kornaufnahmeausnehmungen in Endlagenrelativpositionen der zwei Vereinzelungsscheibenteile eingestellt sind, wird das Risiko einer Fehleinstellung aufgrund einer zu geringen Relativbewegung der zwei Vereinzelungsscheibenteile zueinander erheblich verringert. Die Endlagenrelativpositionen sind über das Antriebsgerät vergleichsweise einfach einstellbar, da die Notwendigkeit einer präzisen Relativpositionserfassung der beiden Vereinzelungsscheibenteile nicht erforderlich ist.

In einer anderen bevorzugten Ausführungsform der erfindungsgemäßen Vereinzelungseinrichtung weist das arretierbare Vereinzelungsscheibenteil eine erste Gruppe von Löchern mit einer ersten Lochgröße und eine zweite Gruppe von Löchern mit einer zweiten Lochgröße auf. In einer ersten Endlagenrelativposition der zwei Vereinzelungsscheibenteile sind vorzugsweise die Löcher der ersten Gruppe mit Ausnehmungen in dem anderen Vereinzelungsscheibenteil in Deckung gebracht. In einer zweiten Endlagenrelativposition der zwei Vereinzelungsscheibenteile sind vorzugsweise die Löcher der zweiten Gruppe mit Ausnehmungen in dem anderen Vereinzelungsscheibenteil in Deckung gebracht. Die Löcher in dem einen Vereinzelungsscheibenteil und die Ausnehmungen in dem anderen Vereinzelungsscheibenteil bilden vorzugsweise gemeinsam die Kornaufnahmeausnehmungen der Vereinzelungsscheibe aus. Somit kann die Einstellung der Größe der Kornaufnahmeausnehmungen über die Lochgröße der mit den Ausnehmungen in dem anderen Vereinzelungsscheibenteil in Deckung gebrachten Löcher erfolgen.

Es ist darüber hinaus eine erfindungsgemäße Vereinzelungseinrichtung vorteilhaft, bei welcher ein Vereinzelungsscheibenteil der zwei relativ zueinander bewegbaren Vereinzelungsscheibenteile als Scheibenkörper ausgebildet ist. Das als Scheibenkörper ausgebildete Vereinzelungsscheibenteil ist vorzugsweise mit einer Antriebswelle des Antriebsgeräts verbunden. Das als Scheibenkörper ausgebildete Vereinzelungsscheibenteil ist vorzugsweise aus Kunststoff ausgebildet. Die Verbindung mit der Antriebswelle des Antriebsgeräts kann eine stoffschlüssige, formschlüssige und/oder kraftschlüssige Verbindung sein.

Darüber hinaus ist eine erfindungsgemäße Vereinzelungseinrichtung bevorzugt, bei welcher das Antriebsgerät dazu eingerichtet ist, die Vereinzelungsscheibe im Vereinzelungsbetrieb der Vereinzelungseinrichtung in eine erste Rotationsrichtung zu bewegen und zur Einstellung der Größe der Kornaufnahmeausnehmungen ein Vereinzelungsscheibenteil in eine zweite entgegengesetzte Rotationsrichtung zu bewegen. An dem Antriebsgerät sind folglich vorzugsweise unterschiedliche Antriebsrichtungen einstellbar. Beispielsweise kann das Antriebsgerät im Vereinzelungsbetrieb der Vereinzelungseinrichtung die Vereinzelungsscheibe im Uhrzeigersinn bewegen, wobei das Antriebsgerät zur Einstellung der Größe der Kornaufnahmeausnehmungen ein Vereinzelungsscheibenteil gegen den Uhrzeigersinn bewegt. Beispielsweise kann das Antriebsgerät im Vereinzelungsbetrieb der Vereinzelungseinrichtung die Vereinzelungsscheibe gegen den Uhrzeigersinn bewegen, wobei das Antriebsgerät zur Einstellung der Größe der Kornaufnahmeausnehmungen ein Vereinzelungsscheibenteil im Uhrzeigersinn bewegt.

An den Vereinzelungsscheibenteilen kann eine Verrastung vorgesehen sein, welche eine unbeabsichtigte Relativbewegung der Vereinzelungsscheibenteile im Vereinzelungsbetrieb, beispielsweise aufgrund der Kornreibung, verhindert.

In einer anderen Ausführungsform der erfindungsgemäßen Vereinzelungseinrichtung ist das Antriebsgerät als Elektromotor ausgebildet. Das Antriebsgerät weist vorzugsweise einen Überlastschutz auf. Insbesondere, wenn die Größe der Kornaufnahmeausnehmungen durch eine Relativbewegung der zwei Vereinzelungsscheibenteile durch die Einstellung von Endlagenrelativpositionen einstellbar sind, verhindert ein Überlastschutz eine Beschädigung des Antriebsgeräts nach Einnahme einer Endlagenrelativposition der Vereinzelungsscheibenteile. Nach erfolgter Einstellung einer Endlagenrelativposition der zwei Vereinzelungsscheibenteile steigt das Drehmoment und somit die Stromaufnahme des Antriebsgeräts an. Somit kann die Stromaufnahme eines als Elektromotor ausgebildeten Antriebsgeräts als Indikator für die Einnahme einer entsprechenden Endlagenrelativposition dienen. Zum Sicherstellen, dass die Vereinzelungsscheibenteile eine ausreichende Relativbewegung zueinander ausgeführt haben, kann die Vereinzelungseinrichtung ferner über eine Winkelüberwachung an den Vereinzelungsscheibenteilen verfügen. Eine entsprechende Winkelüberwachung kann beispielsweise mit einem oder mehreren Winkelsensoren umgesetzt werden, welche den Drehwinkel des arretierbaren und/oder des nicht-arretierbaren Vereinzelungsscheibenteils überwachen.

Ferner kann die Vereinzelungseinrichtung eine Steuerungseinrichtung umfassen, welche dazu eingerichtet ist, ein Fördergebläse für das Saatgut vor der Relativbewegung der Vereinzelungsscheibenteile zu deaktivieren oder die Gebläseleistung vor der Relativbewegung der Vereinzelungsscheibenteile zu verringern. Hierdurch kann erreicht werden, dass sich bei einer Relativbewegung der Vereinzelungsscheibenteile keine Saatkörner in den Kornaufnahmeausnehmungen befinden. Ein Abscheren der Körner bei einer Relativbewegung der Vereinzelungsscheibenteile wird somit effektiv vermieden.

Die der Erfindung zugrundeliegende Aufgabe wird ferner durch eine Sämaschine der eingangs genannten Art gelöst, wobei die mehreren Vereinzelungseinrichtungen der erfindungsgemäßen Sämaschine nach einer der vorstehend beschriebenen Ausführungsformen ausgebildet sind. Hinsichtlich der Vorteile und Modifikationen der erfindungsgemäßen Sämaschine wird auf die Vorteile und Modifikationen der erfindungsgemäßen Vereinzelungseinrichtung verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Vereinzelungseinrichtung mit geöffnetem Gehäuse in einem ersten Zustand in einer perspektivischen Darstellung;
- Fig. 2: die in der Fig. 1 abgebildete Vereinzelungseinrichtung mit geöffnetem Gehäuse in einem zweiten Zustand in einer perspektivischen Darstellung;
- Fig. 3: die in der Fig. 1 abgebildete Vereinzelungseinrichtung mit geöffnetem Gehäuse in einem dritten Zustand in einer perspektivischen Darstellung;
- Fig. 4: ein Ausführungsbeispiel der erfindungsgemäßen Vereinzelungseinrichtung mit geöffnetem Gehäuse in einem ersten Zustand in einer perspektivischen Darstellung;
- Fig. 5: die in der Fig. 4 abgebildete Vereinzelungseinrichtung mit geöffnetem Gehäuse in einem zweiten Zustand in einer perspektivischen Darstellung;
- Fig. 6: die in der Fig. 4 abgebildete Vereinzelungseinrichtung mit geöffnetem Gehäuse in einem dritten Zustand in einer perspektivischen Darstellung;
- Fig. 7: eine Vereinzelungsscheibe einer erfindungsgemäßen Vereinzelungseinrichtung in einer Draufsicht;
- Fig. 8: eine Detaildarstellung der in der Fig. 7 abgebildeten Vereinzelungsscheibe in einem ersten Zustand;
- Fig. 9: eine Detaildarstellung der in der Fig. 7 abgebildeten Vereinzelungsscheibe in einem zweiten Zustand;
- Fig. 10: ein weiteres Ausführungsbeispiel der erfindungsgemäßen Vereinzelungseinrichtung in einer schematischen Darstellung;
- Fig. 11: die in der Fig. 10 abgebildete Vereinzelungseinrichtung in einer weiteren schematischen Darstellung;
- Fig. 12: schematische Darstellungen einer Vereinzelungsscheibe einer erfindungsgemäßen Vereinzelungseinrichtung;
- Fig. 13: eine Vereinzelungsscheibe einer erfindungsgemäßen Vereinzelungseinrichtung in einer Draufsicht;
- Fig. 14: ein Ausführungsbeispiel der erfindungsgemäßen Vereinzelungseinrichtung in einer schematischen Darstellung; und
- Fig. 15: die in der Fig. 14 abgebildete Vereinzelungseinrichtung in einer weiteren schematischen Darstellung.

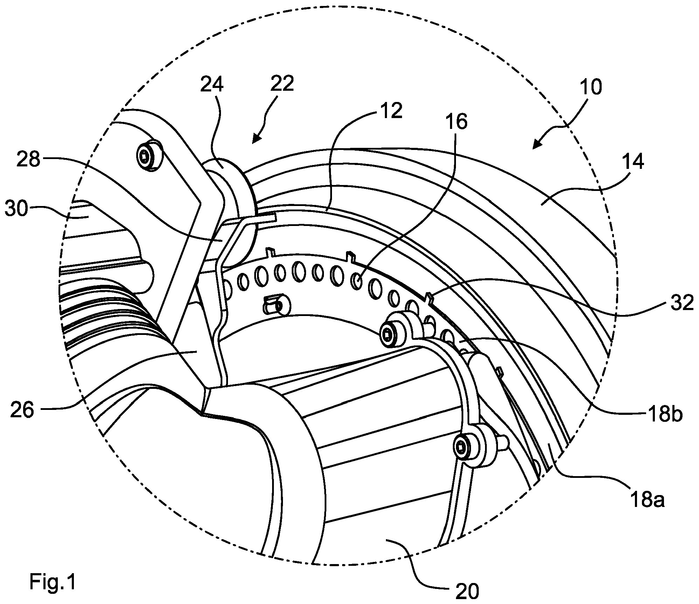

Die Fig. 1 bis 3 zeigen eine Vereinzelungseinrichtung 10 während des Einstellens der Größe der Kornaufnahmeausnehmungen 16 einer Vereinzelungsscheibe 12. Die Vereinzelungsscheibe 12 ist mehrteilig ausgebildet und umfasst ein als Scheibenkörper ausgebildetes Vereinzelungsscheibenteil 18a und ein als gelochter Ring ausgebildetes Vereinzelungsscheibenteil 18b.

Das Vereinzelungsscheibenteil 18a ist mit einer Antriebswelle eines als Elektromotor ausgebildeten Antriebsgeräts 20 verbunden, welches die Vereinzelungsscheibe 12 im Vereinzelungsbetrieb der Vereinzelungseinrichtung 10 rotatorisch antreibt. Das Vereinzelungsscheibenteil 18a ist ein aus Kunststoff ausgebildeter Rotationskörper. Das Vereinzelungsscheibenteil 18b ist ein gelochter Kreisring, welcher aus Metall ausgebildet ist. Das Vereinzelungsscheibenteil 18b ist reibschlüssig mit dem Vereinzelungsscheibenteil 18a verbunden, sodass es gemeinsam mit dem Vereinzelungsscheibenteil 18a rotatorisch von dem Antriebsgerät 20 antreibbar ist, sofern das Vereinzelungsscheibenteil 18b nicht arretiert ist.

Die Vereinzelungsscheibe 12 weist mehrere Kornaufnahmeausnehmungen 16 auf, welche dazu eingerichtet sind, Saatkörner zum Zwecke der Vereinzelung aufzunehmen. Die Vereinzelungsscheibenteile 18a, 18b können zur Einstellung der Größe der Kornaufnahmeausnehmungen 16 mittels der Antriebsgeräts 20 relativ zueinander bewegt werden. Die mehrteilige Vereinzelungsscheibe 12 ist in einem Gehäuse 14 angeordnet, wobei das Gehäuse 14 zur Einstellung der Größe der Kornaufnahmeausnehmungen 16 nicht zu öffnen ist. Das Einstellen der Größe der Kornaufnahmeausnehmungen 16 erfolgt unter Verwendung von ohnehin vorhandener Aktorik der Vereinzelungseinrichtung 10.

Zur Umsetzung einer Relativbewegung zwischen den Vereinzelungsscheibenteilen 18a, 18b ist ein bewegbares Arretierglied 28 zum Arretieren des Vereinzelungsscheibenteils 18b mit einem Anschlagselement 32 an dem Vereinzelungsscheibenteil 18b in Eingriff zu bringen. Das mittels des Arretierglieds 28 arretierbare Vereinzelungsscheibenteil 18b weist mehrere gleichmäßig über dessen Umfang verteilte Anschlagselemente 32 auf. Die Anschlagselemente 32 befinden sich am Außenumfang des Vereinzelungsscheibenteils 18b und sind als Vorsprünge ausgebildet, welche sich in Radialrichtung nach außen erstrecken. Das Arretierglied 28 ist als bewegbarer Arretierhaken ausgebildet und an einer Halterung 26 einer Abstreifeinrichtung 22 der Vereinzelungseinrichtung 10 befestigt. Die Abstreifeinrichtung 22 weist mehrere bewegbare Abstreifkörper 24 auf, mittels welchen Saatkörner von der Vereinzelungsscheibe 12 abgestriffen werden können. Das Arretierglied 28 ist mittels eines Arretiergliedaktuators 30 relativ zu dem arretierbaren Vereinzelungsscheibenteil 18b bewegbar, sodass das Arretierglied 28 mittels des Arretiergliedaktuators 30 in Eingriff mit einem Anschlagselement 32 und außer Eingriff von einem Anschlagselement 32 gebracht werden kann. Der Arretiergliedaktuator 30 ist als Elektromotor ausgebildet und ist gleichzeitig der Positionierantrieb der Abstreifeinrichtung 22. Mittels der Positioniereinrichtung können die Abstreifkörper 24 im Vereinzelungsbetrieb der Vereinzelungseinrichtung 10 innerhalb eines Abstreifbereichs positioniert werden, wobei durch Bewegen der Abstreifkörper 24 aus dem Abstreifbereich heraus ein Anschlagselement 32 des arretierbaren Vereinzelungsscheibenteils 18b mit dem Arretierglied 28 in Anschlag bringbar ist. Durch ein Bewegen der Abstreifkörper 24 aus dem Abstreifbereich heraus kann das an der Abstreifeinrichtung 22 befestigte Arretierglied 28 in den Rotationspfad der Anschlagselemente 32 hinein bewegt werden.

Bei dem in der Fig. 1 dargestellten Zustand befindet sich das Arretierglied 28 in einer Freigabestellung, sodass keine Arretierung des arretierbaren Vereinzelungsscheibenteils 18b umgesetzt ist. Durch die reibschlüssige Verbindung zwischen den Vereinzelungsscheibenteilen 18a, 18b werden folglich beide Vereinzelungsscheibenteile 18a, 18b durch das Antriebsgerät 20 rotatorisch angetrieben.

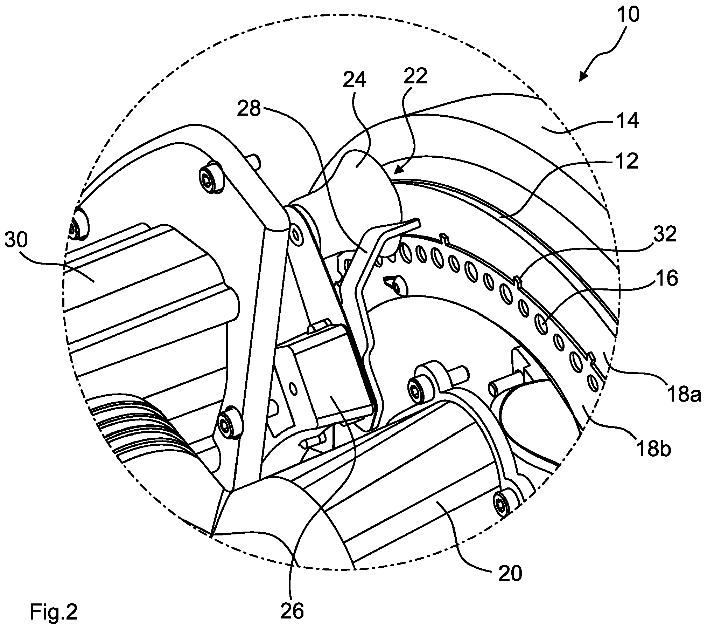

Bei dem in der Fig. 2 dargestellten Zustand wurde die Einstellung der Abstreifeinrichtung 22 verändert. Die Abstreifkörper 24 sowie das Arretierglied 28 wurden derart verschwenkt, dass der Abstand zu dem Vereinzelungsscheibenteil 18b verringert wurde.

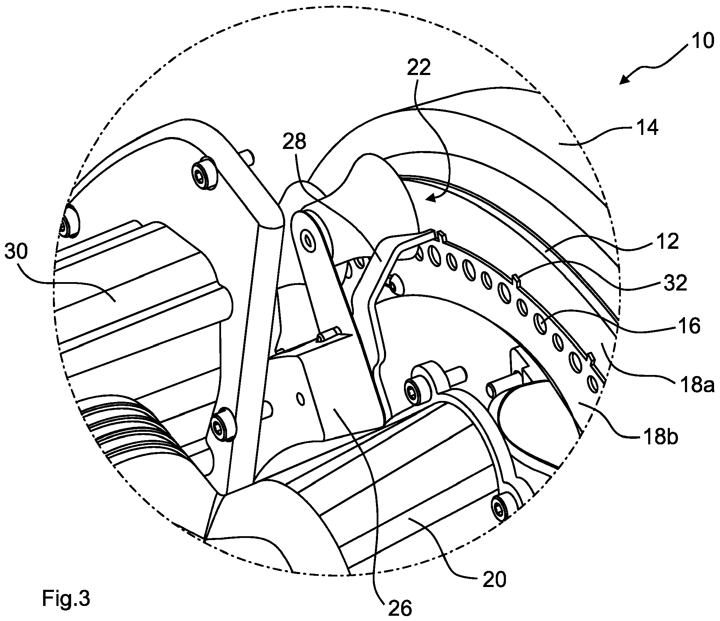

Bei dem in der Fig. 3 dargestellten Zustand wurden die Abstreifkörper 24 aus dem Abstreifbereich heraus bewegt, um das Arretierglied 28 in Anschlag mit einem Anschlagselement 32 zu bringen. In der dargestellten Arretierstellung des Arretierglieds 28 verhindert das Arretierglied 28 eine Drehbewegung des Vereinzelungsscheibenteils 18b gegen den Uhrzeigersinn. Wenn das Antriebsgerät 20 das nicht-arretierbare Vereinzelungsscheibenteil 18a nun gegen den Uhrzeigersinn verdreht, kommt es zu einer Relativbewegung der Vereinzelungsscheibenteile 18a, 18b. Dies führt zu einer Änderung der Größe der Kornaufnahmeausnehmungen 16, da durch die Relativbewegung der Vereinzelungsscheibenteile 18a, 18b eine andere Gruppe von Löchern in dem Vereinzelungsscheibenteil 18b mit Ausnehmungen 44 in dem Vereinzelungsscheibenteil 18a in Deckung gebracht wird.

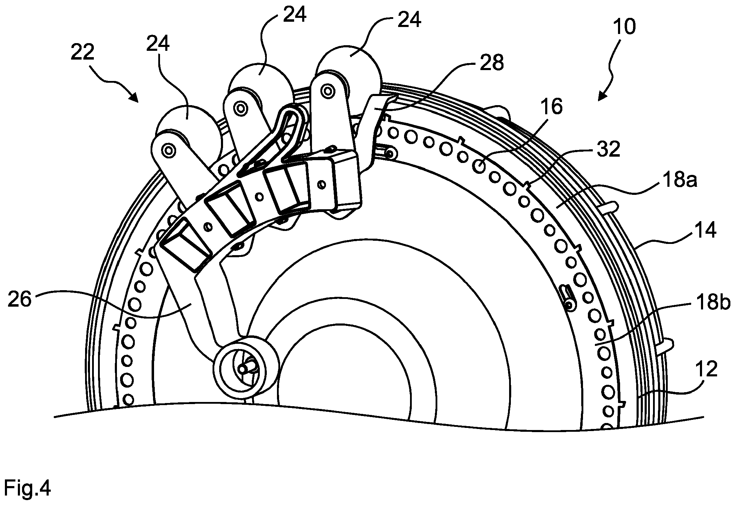

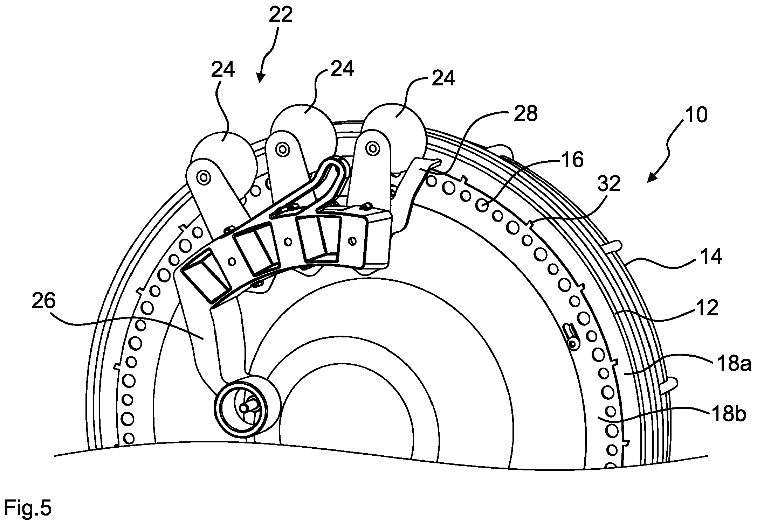

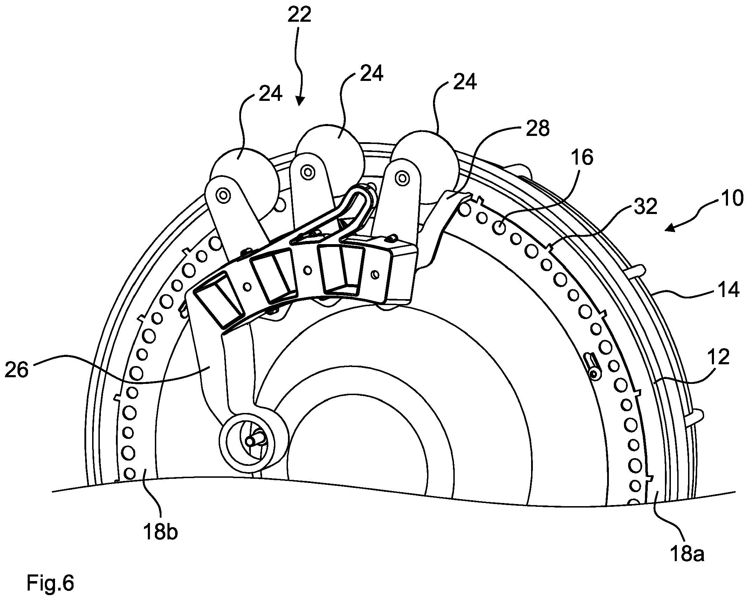

Die Fig. 3 bis 6 zeigen ebenfalls einen Arretiervorgang mittels eines als Arretierhaken ausgebildeten Arretierglieds 28.

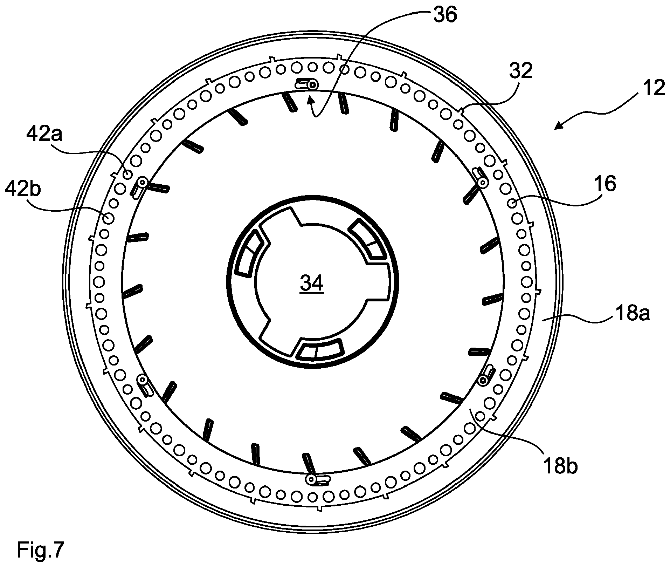

Die in der Fig. 7 dargestellte Vereinzelungsscheibe 12 weist ebenfalls zwei Vereinzelungsscheibenteile 18a, 18b auf, welche relativ zueinander verdrehbar sind. Das als Scheibenkörper ausgebildete Vereinzelungsscheibenteil 18a weist eine zentrale Aufnahmeausnehmung 34 auf, über welche das Vereinzelungsscheibenteil 18a mit einer Antriebswelle eines als Elektromotor ausgebildeten Antriebsgeräts 20 verbunden werden kann. Über die drei nutenförmigen Aussparungen kann eine drehsteife Verbindung zwischen der Antriebswelle des Antriebsgeräts 20 und dem Vereinzelungsscheibenteil 18a hergestellt werden.

Das Vereinzelungsscheibenteil 18b ist als gelochter Ring ausgebildet, wobei der gelochte Ring eine erste Gruppe von Löchern 42a mit einer ersten Lochgröße und eine zweite Gruppe von Löchern 42b mit einer zweiten Lochgröße aufweist. Es sind jeweils Löcher 42a, 42b unterschiedlicher Größe benachbart zueinander angeordnet, sodass sich eine Lochfolge mit alternierender Lochgröße ergibt. Das Vereinzelungsscheibenteil 18a weist auf einer Kreisbahn angeordnete Ausnehmungen 44 auf, welche wahlweise entweder mit den Löchern 42a oder mit den Löchern 42b in Deckung bringbar sind. Die Löcher 42a, 42b in dem Vereinzelungsscheibenteil 18b und die Ausnehmungen 44 in dem Vereinzelungsscheibenteil 18a bilden gemeinsam die Kornaufnahmeausnehmungen 16 der Vereinzelungsscheibe 12 aus.

Die Vereinzelungsscheibe 12 weist Begrenzungseinrichtungen 36 auf, welche die Relativbewegung der zwei Vereinzelungsscheibenteile 18a, 18b begrenzen.

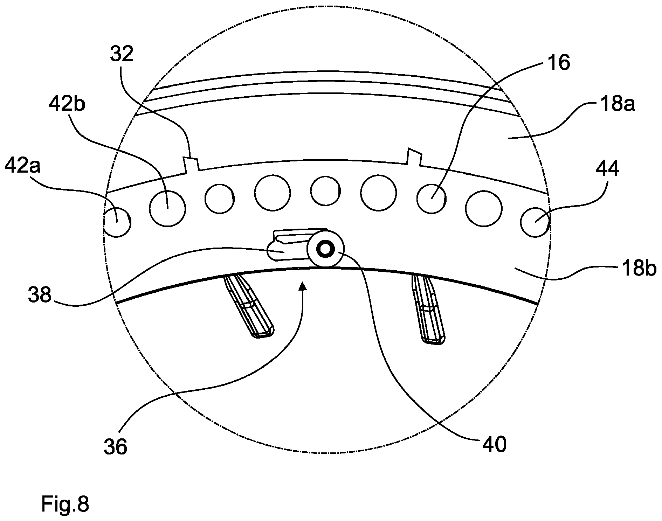

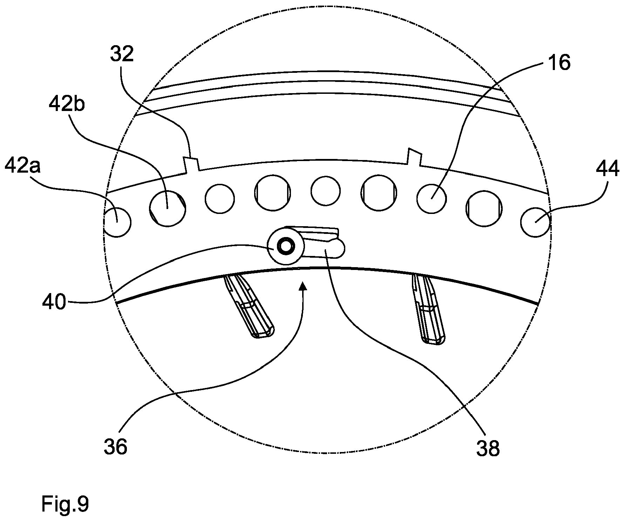

Die Fig. 8 und die Fig. 9 zeigen zwei Endlagenrelativpositionen der zwei Vereinzelungsscheibenteile 18a, 18b, welche von einer Begrenzungseinrichtung 36 vorgegeben werden. Die dargestellte Begrenzungseinrichtung 36 umfasst ein Langloch 38 und einen in dem Langloch 38 bewegbaren Anschlagskörper 40. Der Anschlagskörper 40 ist als Stift ausgebildet und an dem Vereinzelungsscheibenteil 18a befestigt. Das Langloch 38 ist Bestandteil des Vereinzelungsscheibenteils 18b. Der Anschlagskörper 40 schlägt in den Endlagenrelativpositionen der zwei Vereinzelungsscheibenteile 18a, 18b jeweils an einer Begrenzungskante des Langlochs 38 an.

In der in der Fig. 8 dargestellten Endlagenrelativposition der zwei Vereinzelungsscheibenteile 18a, 18b sind die Löcher 42a der ersten Gruppe mit den Ausnehmungen 44 in dem Vereinzelungsscheibenteil 18a in Deckung gebracht.

Bei der in der Fig. 9 dargestellten Endlagenrelativposition der zwei Vereinzelungsscheibenteile 18a, 18b sind die Löcher 42b der zweiten Gruppe mit den Ausnehmungen 44 in dem Vereinzelungsscheibenteil 18a in Deckung gebracht.

Die Löcher 42a, 42b in dem Vereinzelungsscheibenteil 18b, welche mit den Ausnehmungen 44 in dem Vereinzelungsscheibenteil 18a in Deckung gebracht sind, bilden zusammen mit den Ausnehmungen 44 in dem Vereinzelungsscheibenteil 18a die Kornaufnahmeausnehmungen 16 der Vereinzelungsscheibe 12 aus. Somit lässt sich über das In-Deckung-Bringen unterschiedlicher Gruppen von Löchern 42a, 42b die Größe der Kornaufnahmeausnehmungen 16 verändern.

Damit die Relativbewegung der Vereinzelungsscheibenteile 18a, 18b in beide Richtungen umsetzbar ist, sind an dem Antriebsgerät 20 unterschiedliche Antriebsrichtungen einstellbar. Vorzugsweise kann eine Rotation im Uhrzeigersinn oder eine Rotation gegen den Uhrzeigersinn einstellbar sein.

Die dargestellten Vereinzelungseinrichtungen 10 können mit einer Fernsteuerungseinrichtung kombiniert werden, welche signalübertragend mit der Vereinzelungseinrichtung 10 gekoppelt ist und mittels welcher die Einstellung der Größe der Kornaufnahmeausnehmungen 16 an der Vereinzelungseinrichtung 10 aus der Ferne veranlassbar ist. Insbesondere lässt sich über die Fernsteuerungseinrichtung das Arretierglied 28 betätigen und/oder das Antriebsgerät 20 steuern.

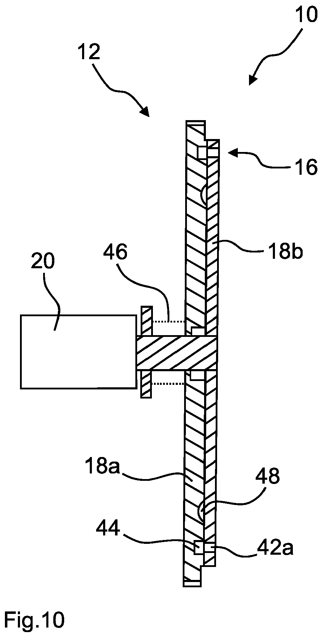

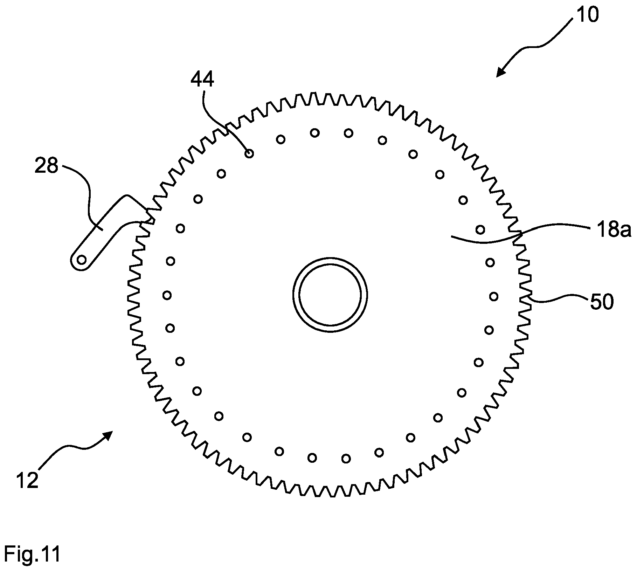

Die Fig. 10 und 11 zeigen eine Vereinzelungseinrichtung 10, bei welcher beide Vereinzelungsscheibenteile 18a, 18b als Scheibenkörper ausgebildet sind. Das Vereinzelungsscheibenteil 18a ist lose auf einer Antriebswelle des Antriebsgeräts 20 gelagert und wird im Vereinzelungsbetrieb der Vereinzelungseinrichtung 10 durch die Rastnase 48 an dem Vereinzelungsscheibenteil 18b mitgenommen. Zur Verstellung der Größe der Kornaufnahmeausnehmungen 16 fährt eine Abstreifeinrichtung, an welcher das Arretierglied 28 befestigt ist, über einen Abstreifbereich hinaus in eine Endlage, sodass das Arretierglied 28 in die Verzahnung 50 des Vereinzelungsscheibenteils 18a hinein bewegt wird. In diesem Zustand ist das Vereinzelungsscheibenteil 18a arretiert, sodass eine durch das Antriebsgerät 20 hervorgerufene Drehbewegung des Vereinzelungsscheibenteils 18b zu einer Axialbewegung des Vereinzelungsscheibenteils 18a und zu einer Relativbewegung der Vereinzelungsscheibenteile 18a, 18b führt. Durch eine Relativbewegung der Vereinzelungsscheibenteile 18a, 18b können die Ausnehmungen 44 in dem Vereinzelungsscheibenteil 18a mit unterschiedlichen Gruppen von Löchern 42a, 42b in dem Vereinzelungsscheibenteil 18b in Deckung gebracht werden. Die Löcher 42a, 42b der unterschiedlichen Gruppen weisen unterschiedliche Lochgrößen auf, sodass über ein In-Deckung-Bringen der Löcher 42a, 42b unterschiedlicher Gruppen die Größe der Kornaufnahmeausnehmungen 16 einstellbar ist. Eine Feder 46 drückt das Vereinzelungsscheibenteil 18a axial gegen das Vereinzelungsscheibenteil 18b, sodass nach dem Lösen der Arretierung eine erneute Verrastung der Vereinzelungsscheibenteile 18a, 18b über die Rastnase 48 erfolgt.

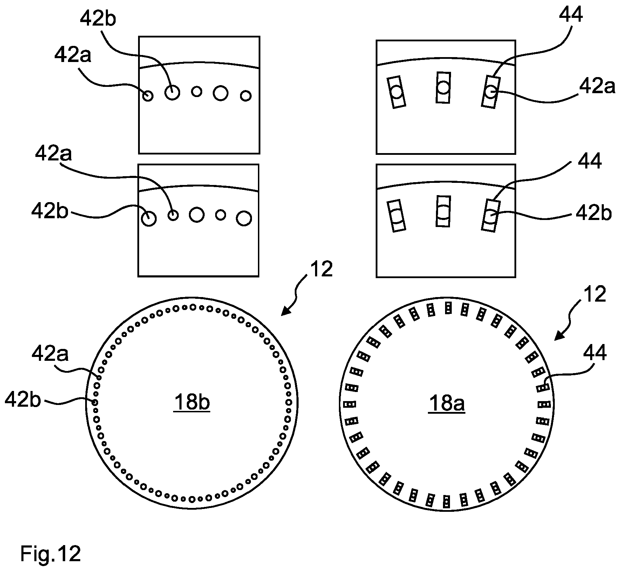

Die Fig. 12 zeigt links eine erste Seite einer Vereinzelungsscheibe 12 und rechts eine zweite Seite der Vereinzelungsscheibe 12. Das Vereinzelungsscheibenteil 18b ist als Scheibenkörper ausgebildet und weist eine erste Gruppe von Löchern 42a mit einer ersten Lochgröße und eine zweite Gruppe von Löchern 42b mit einer zweiten Lochgröße auf. Es sind jeweils Löcher 42a, 42b unterschiedlicher Größe benachbart zueinander angeordnet, sodass sich eine Lochfolge mit alternierender Lochgröße ergibt.

Das als Scheibenkörper ausgebildete Vereinzelungsscheibenteil 18a weist eine Mehrzahl von Ausnehmungen 44 identischer Größe auf, welche auf einer Kreisbahn angeordnet sind. Die Ausnehmungen 44 sind entweder mit den Löchern 42a der ersten Gruppe oder mit den Löchern 42b der zweiten Gruppe in Deckung bringbar. Auf diese Weise sind zwei unterschiedliche Größen von Kornaufnahmeausnehmungen 16 einstellbar.

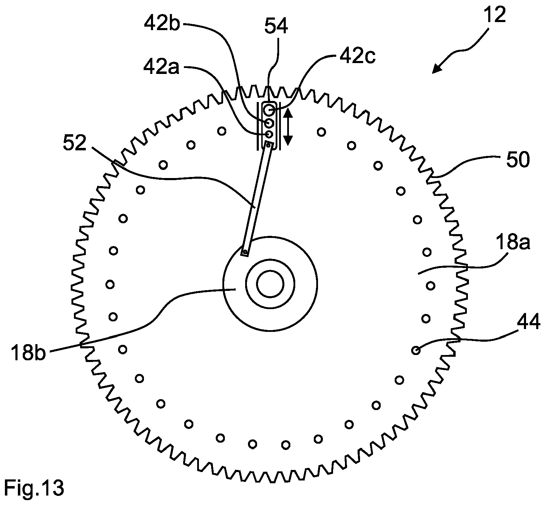

Die Fig. 13 zeigt eine mehrteilige Vereinzelungsscheibe 12, wobei die Vereinzelungsscheibenteile 18a, 18b relativ zueinander verdrehbar sind. An dem Vereinzelungsscheibenteil 18b ist eine Stange 52 angelenkt, wobei die Stange 52 mit einer geführten Lochschiene 54 verbunden ist. Die geführte Lochschiene 54 weist mehrere Löcher 42a - 42c unterschiedlicher Größe auf, welche je nach Relativwinkel zwischen den Vereinzelungsscheibenteilen 18a, 18b mit einer Ausnehmungen 44 in dem Vereinzelungsscheibenteil 18a in Deckung bringbar sind. Somit erlaubt eine geführte Lochschiene 54, welche über eine Relativbewegung der Vereinzelungsscheibenteile 18a, 18b verfahrbar ist, ebenfalls die Verstellung der Größe der Kornaufnahmeausnehmungen 16. Vorzugsweise weist eine entsprechende Vereinzelungsscheibe 12 mehrere geführte Lochschienen 54 auf, wobei jeder Ausnehmung 44 eine Lochschiene 54 zugeordnet ist.

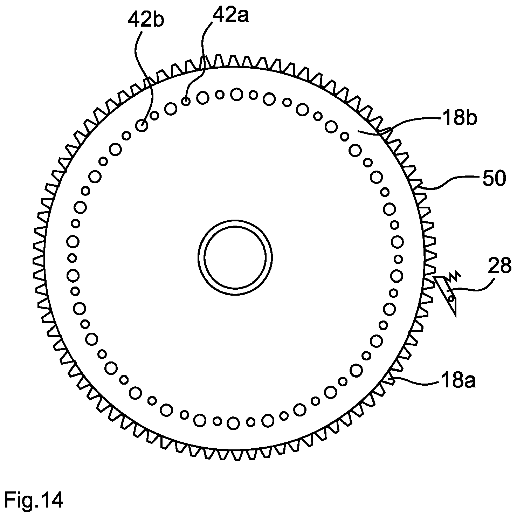

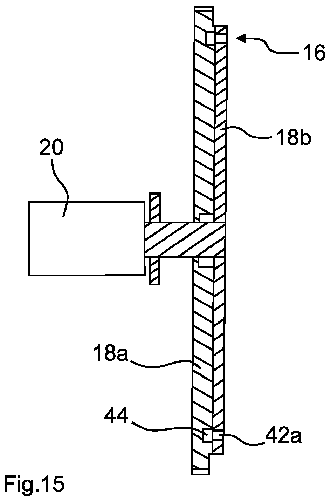

Die Fig. 14 und 15 zeigen eine Vereinzelungseinrichtung 10 mit einem Freilauf. Das als Scheibenkörper ausgebildete Vereinzelungsscheibenteil 18b ist fest mit einer Antriebswelle des Antriebsgeräts 20 verbunden. Das als Scheibenkörper ausgebildete Vereinzelungsscheibenteil 18b ist mit einem Freilauf auf der Antriebswelle des Antriebsgeräts 20 befestigt und dreht sich nur in die Vereinzelungsdrehrichtung mit, welche im Vereinzelungsbetrieb der Vereinzelungseinrichtung 10 eingestellt ist. Bei einer Drehrichtungsumkehr durch das Antriebsgerät 20 erfolgt eine Arretierung des Vereinzelungsscheibenteils 18a durch das Arretierglied 28. Durch ein Rückwärtsdrehen des Antriebsgeräts 20 um einen vorgegebenen Winkel kann auf diese Weise eine andere Gruppe von Löchern 42a, 42b mit den Ausnehmungen 44 in dem Vereinzelungsscheibenteil 18a in Deckung gebracht werden, um somit die Größe der Kornaufnahmeausnehmungen 16 zu verändern.

### Bezugszeichenliste

- 10: Vereinzelungseinrichtung
- 12: Vereinzelungsscheibe
- 14: Gehäuse
- 16: Kornaufnahmeausnehmungen
- 18a, 18b: Vereinzelungsscheibenteile
- 20: Antriebsgerät
- 22: Abstreifeinrichtung
- 24: Abstreifkörper
- 26: Halterung
- 28: Arretierglied
- 30: Arrtiergliedaktuator
- 32: Anschlagselemente
- 34: Aufnahmeausnehmung
- 36: Begrenzungseinrichtung
- 38: Langloch
- 40: Anschlagskörper
- 42a-42c: Löcher
- 44: Ausnehmungen
- 46: Feder
- 48: Rastnase
- 50: Verzahnung
- 52: Stange
- 54: Lochschiene

## Patentansprüche

1. Vereinzelungseinrichtung (10) zum Vereinzeln von Saatkörnern, mit
- einer mehrteiligen Vereinzelungsscheibe (12), welche mehrere Kornaufnahmeausnehmungen (16) aufweist und an welcher mittels einer Relativbewegung von zwei Vereinzelungsscheibenteilen (18a, 18b) zumindest zwei unterschiedliche Größen von Kornaufnahmeausnehmungen (16) einstellbar sind, und
- einem Antriebsgerät (20), welches mit der Vereinzelungsscheibe (12) verbunden und dazu eingerichtet ist, die Vereinzelungsscheibe (12) im Vereinzelungsbetrieb der Vereinzelungseinrichtung (10) rotatorisch anzutreiben;
**dadurch gekennzeichnet, dass** die zwei Vereinzelungsscheibenteile (18a, 18b) zur Einstellung der Größe der Kornaufnahmeausnehmungen (16) mittels des Antriebsgeräts (20) relativ zueinander bewegbar sind.

2. Vereinzelungseinrichtung (10) nach Anspruch 1, ferner umfassend:
- ein bewegbares Arretierglied (28);
**dadurch gekennzeichnet, dass** das Arretierglied (28) dazu eingerichtet ist, zur Einstellung der Größe der Kornaufnahmeausnehmungen (16) ein Vereinzelungsscheibenteil (18a, 18b) zu arretieren.

3. Vereinzelungseinrichtung (10) nach Anspruch 2,
**dadurch gekennzeichnet, dass** das mittels des Arretierglieds (28) arretierbare Vereinzelungsscheibenteil (18a, 18b) ein oder mehrere Anschlagselemente (32) aufweist, wobei das Arretierglied (28) und das eine oder die mehreren Anschlagselemente (32) zur Arretierung des arretierbaren Vereinzelungsscheibenteils (18a, 18b) in Anschlag bringbar sind.

4. Vereinzelungseinrichtung (10) nach Anspruch 2 oder 3, ferner umfassend:
- einen Arrtiergliedaktuator (30), welcher dazu eingerichtet ist, das Arretierglied (28) zur Umsetzung oder zur Freigabe der Arretierung des arretierbaren Vereinzelungsscheibenteils (18a, 18b) relativ zu dem arretierbaren Vereinzelungsscheibenteil (18a, 18b) zu bewegen.

5. Vereinzelungseinrichtung (10) nach einem der Ansprüche 2 bis 4, ferner umfassend:
- eine Abstreifeinrichtung (22), welche einen bewegbaren Abstreifkörper (24) aufweist und dazu eingerichtet ist, mittels des Abstreifkörpers (24) Saatkörner von der Vereinzelungsscheibe (12) abzustreifen;
**dadurch gekennzeichnet, dass** das Arretierglied (28) als Bestandteil der Abstreifeinrichtung (22) ausgebildet oder an der Abstreifeinrichtung (22) befestigt ist.

6. Vereinzelungseinrichtung (10) nach Anspruch 5,
**dadurch gekennzeichnet, dass** der Abstreifkörper (24) im Vereinzelungsbetrieb der Vereinzelungseinrichtung (10) mittels einer Positioniereinrichtung innerhalb eines Abstreifbereichs positionierbar ist, wobei durch Bewegen des Abstreifkörpers (24) aus dem Abstreifbereich heraus ein Anschlagselement (32) des arretierbaren Vereinzelungsscheibenteils (18a, 18b) mit dem Arretierglied (28) in Anschlag bringbar ist.

7. Vereinzelungseinrichtung (10) nach einem der vorstehenden Ansprüche, **dadurch gekennzeichnet, dass** ein Vereinzelungsscheibenteil (18b) der zwei relativ zueinander bewegbaren Vereinzelungsscheibenteile (18a, 18b) als gelochter Ring ausgebildet ist.

8. Vereinzelungseinrichtung (10) nach einem der vorstehenden Ansprüche, **gekennzeichnet durch** eine Begrenzungseinrichtung (36), welche die Relativbewegung der zwei Vereinzelungsscheibenteile (18a, 18b) begrenzt und zwei Endlagenrelativpositionen der zwei Vereinzelungsscheibenteile (18a, 18b) vorgibt.

9. Vereinzelungseinrichtung (10) nach Anspruch 8,
**dadurch gekennzeichnet, dass** eine erste Größe der Kornaufnahmeausnehmungen (16) durch eine Relativbewegung der zwei Vereinzelungsscheibenteile (18a, 18b) in eine erste Endlagenrelativposition hinein und eine zweite Größe der Kornaufnahmeausnehmungen (16) durch eine Relativbewegung der zwei Vereinzelungsscheibenteile (18a, 18b) in eine zweite Endlagenrelativposition hinein einstellbar ist.

10. Vereinzelungseinrichtung (10) nach einem der Ansprüche 2 bis 9,
**dadurch gekennzeichnet, dass** das arretierbare Vereinzelungsscheibenteil (18a, 18b) eine erste Gruppe von Löchern (42a) mit einer ersten Lochgröße und eine zweite Gruppe von Löchern (42b) mit einer zweiten Lochgröße aufweist und in einer ersten Endlagenrelativposition der zwei Vereinzelungsscheibenteile (18a, 18b) die Löcher (42a) der ersten Gruppe mit Ausnehmungen (44) in dem anderen Vereinzelungsscheibenteil (18a, 18b) in Deckung gebracht sind und in einer zweiten Endlagenrelativposition der zwei Vereinzelungsscheibenteile (18a, 18b) die Löcher (42b) der zweiten Gruppe mit Ausnehmungen (44) in dem anderen Vereinzelungsscheibenteil (18a, 18b) in Deckung gebracht sind.

11. Vereinzelungseinrichtung (10) nach einem der vorstehenden Ansprüche, **dadurch gekennzeichnet, dass** ein Vereinzelungsscheibenteil (18a, 18b) der zwei relativ zueinander bewegbaren Vereinzelungsscheibenteile (18a, 18b) als Scheibenkörper ausgebildet ist, welcher mit einer Antriebswelle des Antriebsgeräts (20) verbunden ist.

12. Vereinzelungseinrichtung (10) nach einem der vorstehenden Ansprüche, **dadurch gekennzeichnet, dass** das Antriebsgerät (20) dazu eingerichtet ist, die Vereinzelungsscheibe (12) im Vereinzelungsbetrieb der Vereinzelungseinrichtung (10) in eine erste Rotationsrichtung zu bewegen und zur Einstellung der Größe der Kornaufnahmeausnehmungen (16) ein Vereinzelungsscheibenteil (18a, 18b) in eine zweite entgegengesetzte Rotationsrichtung zu bewegen.

13. Vereinzelungseinrichtung (10) nach einem der vorstehenden Ansprüche, **dadurch gekennzeichnet, dass** das Antriebsgerät (20) als Elektromotor ausgebildet ist.

14. Sämaschine, mit
- mehreren Vereinzelungseinrichtungen (10) zum Vereinzeln von Saatkörnern;
**dadurch gekennzeichnet, dass** die mehreren Vereinzelungseinrichtungen (10) nach einem der Ansprüche 1 bis 13 ausgebildet sind.

## Claims

1. Separating device (10) for separating seed grains, comprising
- a multi-part separating disc (12) which has a plurality of grain receiving recesses (16) and on which at least two different sizes of grain receiving recesses (16) can be adjusted by means of a relative movement of two separating-disc parts (18a, 18b), and
- a drive unit (20) which is connected to the separating disc (12) and is designed to rotationally drive the separating disc (12) in the separating mode of the separating device (10);
**characterized in that** the two separating-disc parts (18a, 18b) are movable relative to one another by means of the drive unit (20) in order to adjust the size of the grain receiving recesses (16).

2. Separating device (10) according to claim 1, further comprising:
- a movable locking member (28);
**characterized in that** the locking member (28) is designed to lock a separating-disc part (18a, 18b) in order to adjust the size of the grain receiving recesses (16).

3. Separating device (10) according to claim 2,
**characterized in that** the separating-disc part (18a, 18b) lockable by means of the locking member (28) has one or more stop elements (32), it being possible for the locking member (28) and the one or more stop elements (32) to be brought into abutment for locking the lockable separating-disc part (18a, 18b).

4. Separating device (10) according to claim 2 or 3, further comprising:
- a locking member actuator (30) which is designed to move the locking member (28) relative to the lockable separating-disc part (18a, 18b) for locking or unlocking the lockable separating-disc part (18a, 18b).

5. Separating device (10) according to any of claims 2 to 4, further comprising:
- a removal device (22) which has a movable removal element (24) and is designed to remove seed grains from the separating disc (12) by means of the removal element (24);
**characterized in that** the locking element (28) is designed as a component of the removal device (22) or is fastened to the removal device (22).

6. Separating device (10) according to claim 5,
**characterized in that,** in the separating mode of the separating device (10), the removal element (24) can be positioned within a removal region by means of a positioning device, it being possible for a stop element (32) of the lockable separating-disc part (18a, 18b) to be brought into abutment with the locking element (28) by moving the removal element (24) out of the removal region.

7. Separating device (10) according to any of the preceding claims,
**characterized in that** a separating-disc part (18b) of the two separating-disc parts (18a, 18b) movable relative to one another is designed as a perforated ring.

8. Separating device (10) according to any of the preceding claims,
**characterized by** a limiting device (36) which limits the relative movement of the two separating-disc parts (18a, 18b) and predetermines two end state relative positions of the two separating-disc parts (18a, 18b).

9. Separating device (10) according to claim 8,
**characterized in that** a first size of the grain receiving recesses (16) can be adjusted by a relative movement of the two separating disc parts (18a, 18b) into a first end state relative position, and a second size of the grain receiving recesses (16) can be adjusted by a relative movement of the two separating disc parts (18a, 18b) into a second end state relative position.

10. Separating device (10) according to any of claims 2 to 9,
**characterized in that** the lockable separating-disc part (18a, 18b) has a first group of holes (42a) having a first hole size and a second group of holes (42b) having a second hole size and, in a first end state relative position of the two separating disc parts (18a, 18b), the holes (42a) of the first group are brought into alignment with recesses (44) in the other separating-disc part (18a, 18b) and, in a second end state relative position of the two separating disc parts (18a, 18b), the holes (42b) of the second group are brought into alignment with recesses (44) in the other separating-disc part (18a, 18b).

11. Separating device (10) according to any of the preceding claims,
**characterized in that** a separating-disc part (18a, 18b) of the two separating-disc parts (18a, 18b) movable relative to one another is designed as a disc body which is connected to a drive shaft of the drive unit (20).

12. Separating device (10) according to any of the preceding claims,
**characterized in that** the drive unit (20) is designed to move the separating disc (12) in a first direction of rotation in the separating mode of the separating device (10) and to move a separating-disc part (18a, 18b) in a second, opposite direction of rotation in order to adjust the size of the grain receiving recesses (16).

13. Separating device (10) according to any of the preceding claims, **characterized in that** the drive unit (20) is designed as an electric motor.

14. Seed drill comprising
- a plurality of separating devices (10) for separating seed grains;
**characterized in that** the plurality of separating devices (10) are designed according to any of claims 1 to 13.

## Revendications

1. Dispositif séparateur (10) destiné à séparer des graines de semence, comportant
- un disque séparateur (12) en plusieurs parties, qui présente plusieurs évidements de réception (16) de graines et sur lequel au moins deux dimensions différentes d'évidements de réception (16) de graines peuvent être réglées à l'aide d'un mouvement relatif de deux parties (18a, 18b) de disque séparateur et
- un appareil d'entraînement (20), qui est relié au disque séparateur (12) et qui est conçu pour entraîner en rotation le disque séparateur (12) lors du fonctionnement en séparation du dispositif séparateur (10) ;
**caractérisé en ce que** les deux parties (18a, 18b) de disque séparateur sont mobiles l'une par rapport à l'autre afin de régler la dimension des évidements de réception (16) de graines à l'aide de l'appareil d'entraînement (20).

2. Dispositif séparateur (10) selon la revendication 1, comprenant en outre :
- un organe de blocage (28) mobile ;
**caractérisé en ce que** l'organe de blocage (28) est conçu pour bloquer une partie (18a, 18b) de disque séparateur afin de régler la dimension des évidements de réception (16) de graines.

3. Dispositif séparateur (10) selon la revendication 2,
**caractérisé en ce que** la partie (18a, 18b) de disque séparateur pouvant être bloquée à l'aide de l'organe de blocage (28) présente un ou plusieurs éléments de butée (32), l'organe de blocage (28) et le ou les plusieurs éléments de butée (32) pouvant être amenés en butée afin de bloquer la partie (18a, 18b) de disque séparateur pouvant être bloquée.

4. Dispositif séparateur (10) selon la revendication 2 ou 3, comprenant en outre :
- un actionneur (30) d'organe de blocage, qui est conçu pour déplacer l'organe de blocage (28) afin de convertir ou de libérer le blocage de la partie (18a, 18b) de disque séparateur pouvant être bloquée par rapport à la partie (18a, 18b) de disque séparateur pouvant être bloquée.

5. Dispositif séparateur (10) selon l'une des revendications 2 à 4, comprenant en outre :
- un dispositif racleur (22), qui présente un corps racleur (24) mobile et qui est conçu pour éliminer par raclage, à l'aide du corps racleur (24), des graines de semence du disque séparateur (12) ;
**caractérisé en ce que** l'organe de blocage (28) est réalisé comme composant du dispositif racleur (22) ou est fixé au dispositif racleur (22).

6. Dispositif racleur (10) selon la revendication 5,
**caractérisé en ce que** le corps racleur (24) peut être positionné, lors du fonctionnement en séparation du dispositif séparateur (10), à l'aide d'un dispositif de positionnement, dans une zone de raclage, un élément de butée (32) de la partie (18a, 18b) de disque séparateur pouvant être bloquée pouvant être amené en butée avec l'organe de blocage (28) par un déplacement du corps racleur (24) hors de la zone de raclage.

7. Dispositif séparateur (10) selon l'une des revendications précédentes,
**caractérisé en ce qu'**une partie (18b) de disque séparateur des deux parties (18a, 18b) de disque séparateur mobiles l'une par rapport à l'autre est réalisée sous forme de bague perforée.

8. Dispositif séparateur (10) selon l'une des revendications précédentes,
**caractérisé par** un dispositif de délimitation (36), qui délimite le mouvement relatif des deux parties (18a, 18b) de disque séparateur et qui spécifie deux positions relatives de fin de course des deux parties (18a, 18b) de disque séparateur.

9. Dispositif séparateur (10) selon la revendication 8,
**caractérisé en ce qu'**une première dimension des évidements de réception (16) de graines peut être réglée par un mouvement relatif des deux parties (18a, 18b) de disque séparateur dans une première position relative de fin de course et une seconde dimension des évidements de réception (16) de graines peut être réglée par un mouvement relatif des deux parties (18a, 18b) de disque séparateur dans une seconde position relative de fin de course.

10. Dispositif séparateur (10) selon l'une des revendications 2 à 9,
**caractérisé en ce que** la partie (18a, 18b) de disque séparateur pouvant être bloquée présente un premier groupe de perforations (42a) d'une première dimension de perforation et un second groupe de perforations (42b) d'une seconde dimension de perforation et, dans une première position relative de fin de course des deux parties (18a, 18b) de disque séparateur, les perforations (42a) du premier groupe sont amenées à recouvrir des évidements (44) dans l'autre partie (18a, 18b) de disque séparateur et, dans une seconde position relative de fin de course des deux parties (18a, 18b) de disque séparateur, les perforations (42b) du second groupe sont amenées à recouvrir des évidements (44) dans l'autre partie (18a, 18b) de disque séparateur.

11. Dispositif séparateur (10) selon l'une des revendications précédentes,
**caractérisé en ce qu'**une partie (18a, 18b) de disque séparateur des deux parties (18a, 18b) de disque séparateur mobiles l'une par rapport à l'autre est réalisée comme corps de disque qui est relié à un arbre d'entraînement de l'appareil d'entraînement (20).

12. Dispositif séparateur (10) selon l'une des revendications précédentes,
**caractérisé en ce que** l'appareil d'entraînement (20) est conçu pour déplacer le disque séparateur (12), lors du fonctionnement en séparation du dispositif séparateur (10), dans un premier sens de rotation et, afin de régler la dimension des évidements de réception (16) de graines, pour déplacer une partie (18a, 18b) de disque séparateur dans un second sens de rotation opposé.

13. Dispositif séparateur (10) selon l'une des revendications précédentes,
**caractérisé en ce que** l'appareil d'entraînement (20) est réalisé sous forme de moteur électrique.

14. Semoir, comportant
- plusieurs dispositifs séparateurs (10) destinés à séparer des graines de semence ;
**caractérisé en ce que** les plusieurs dispositifs séparateurs (10) sont réalisés selon l'une des revendications 1 à 13.
